Europäisches Patentamt

European Patent Office

Office européen des brevets

(19)

(11) Publication number: **0 217 669 B1**

## EUROPEAN PATENT SPECIFICATION

(12)

(45) Date of publication of patent specification: **15.01.92**  (51) Int. Cl.⁵: **H04N 9/24**

(21) Application number: **86307617.0**

(22) Date of filing: **02.10.86**

(54) Beam-index type colour cathode ray tube devices.

(30) Priority: **03.10.85 JP 220798/85**
**17.10.85 JP 231889/85**

(43) Date of publication of application:
**08.04.87 Bulletin  87/15**

(45) Publication of the grant of the patent:
**15.01.92 Bulletin  92/03**

(84) Designated Contracting States:
**DE FR GB NL**

(56) References cited:
**EP-A- 0 214 871**
**US-A- 3 081 414**

**IEEE TRANSACTIONS ON CONSUMER ELECTRONICS, vol. CE-31, no. 3, August 1985,
pages 163-173, IEEE, New York, US; M.
YAMANO et al.: "A color flat cathode ray
tube"**

(73) Proprietor: **SONY CORPORATION**
**7-35 Kitashinagawa 6-Chome Shinagawa-ku
Tokyo 141(JP)**

(72) Inventor: **Takeuchi, Kenichi c/o Sony Corpora-
tion**
**Patents Division 6-7-35 Kitashinagawa
Shinagawa-ku Tokyo 141(JP)**

(74) Representative: **Cotter, Ivan John et al
D. YOUNG & CO. 10 Staple Inn
London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to beam-index type colour cathode ray tube devices.

A so-called reflex colour cathode ray tube device of the beam-index type has been proposed (e.g. IEEE TRANSACTIONS ON CONSUMER ELECTRONICS, vol. CE-31, no. 3, August 1985, pages 163-173, IEEE, New York, US; M. YAMANO et al.: "A color flat cathode ray tube") as one of the beam-index type colour cathode ray tube devices which can in general be designed to be used in forming colour television receivers of relatively small size. The reflex colour cathode ray tube device of the beam-index type comprises a flat colour cathode ray tube having a front panel portion which allows coloured light to pass therethrough and a screen panel portion which faces the front panel portion and is provided on an inner surface thereof with a phosphor screen including a plurality of colour phosphor stripes of three primary colours and a plurality of index phosphor stripes, and a photodetecting portion disposed outside of the flat colour cathode ray tube. The photodetecting portion includes a luminescence receiving plate member which faces an outer surface of the screen panel portion of the flat colour cathode ray tube for receiving fluorescence emitted from each of the index phosphor stripes and emitting secondary fluorescence in a wavelength range different from that of the fluorescence received, and a fluorescence detector attached to the luminescence receiving plate member for detecting the secondary fluorescence emitted by the luminescence receiving plate member. With such a reflex colour cathode ray tube device of the beam-index type, a colour image displayed on the phosphor screen can be observed through the front panel portion from the outside thereof and the fluorescence from each of the index phosphor stripes is detected substantially at the outside of the screen panel portion.

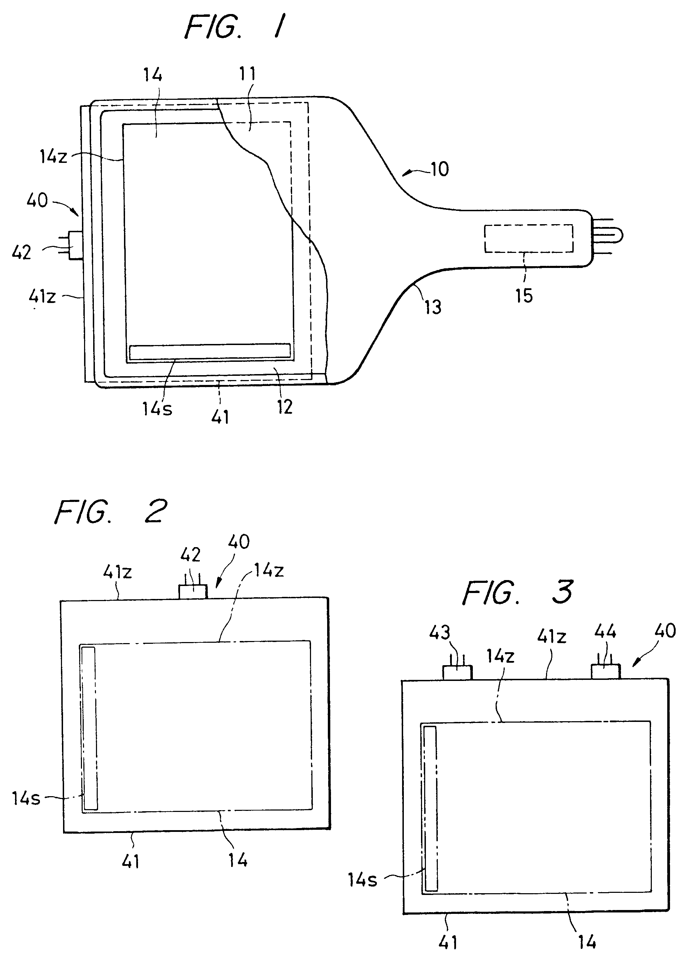

Figure 1 of the accompanying drawings shows a previously proposed reflex colour cathode ray tube device of the beam-index type. The device comprises a colour cathode ray tube 10 and a photodetecting portion 40 disposed outside of the colour cathode ray tube 10.

The colour cathode ray tube 10 has a flat glass envelope which includes a front panel portion 11, a screen panel portion 12 facing the front panel portion 11, and a neck portion 13 connected to both the front panel portion 11 and the screen panel portion 12. The screen panel portion 12 is provided on an inner surface thereof with a phosphor screen 14 of rectangular configuration. The phoshor screen 14 includes a plurality of colour phosphor stripes of three primary colours, namely green, red and blue phosphor stripes, and a plurality of index phosphor stripes. An electron gun assembly 15 contained in the neck portion 13 is operative to produce an electron beam that impinges on the phosphor screen 14 to scan the screen. The front panel portion 11 permits coloured light to pass therethrough and the screen panel portion 12 permits index fluorescence emitted from each of the index phosphor stripes, with a peak level at a range of ultraviolet rays in its spectral characteristic, to pass therethrough. At a partial area 14s of the phosphor screen 14 at which each horizontal beam scan starts, a colour phosphor stripe is not provided but the index phosphor stripes are provided.

The photodetecting portion 40 comprises a luminescence receiving plate member 41 which is rectangular in shape and is disposed to face an outer surface of the screen panel portion 12 and to extend along the phosphor screen 14, and an index fluorescence detector 42 which contains a photosensitive device such as a photodiode and is attached to the centre of a side portion 41z of the luminescence receiving plate member 41 which extends parallel to a top end 14z of the phosphor screen 14.

The luminescence receiving plate member 41 is formed of, for example, acrylic resins having dispersed therein specific phosphors which are excited by the index fluorescence from the index phosphor stripes and emit secondary index fluorescence which is in a wavelength range different from that of the index fluorescence received thereby and which is suitable for detection by the index fluorescence detector 42. The luminescence receiving plate member 41 is operative to receive the index fluorescence emitted by each of the index phosphor stripes that enters into it through the screen panel portion 12 and to produce the secondary index fluorescence in response to the index fluorescence received thereby.

In such a beam-index type colour cathode ray tube device, when the phosphor screen 14 on the inner surface of the screen panel portion 12 is scanned by the electron beam generated by the electron gun assembly 15, the index fluorescence emitted by each of the index phosphor stripes enters into the luminescence receiving plate member 41 through the screen panel portion 12 and the secondary index fluorescence is produced in the luminescence receiving plate member 41 in response to the index fluorescence received thereby to be detected by the index fluorescence detector 42. The index fluorescence detector 42 produces an index signal to be used for causing the electron beam generated by the electron gun assembly 15 to be modulated in density with a colour video signal supplied to the electron gun assembly 15 apropriately in response to momentary scanning positions of the electron beam on the phosphor screen 14. With such electron beam scanning, the green, red and blue phosphor stripes on the phosphor screen 14 emit green, red and blue fluorescences each having an intensity determined in accordance with the density of the electron beams, respectively, and a colour image formed by these green, red and blue fluorescences is observed through the front panel portion 11 from the outside of the portion 11.

Generally, a photosensitive device such as a photodiode has a sensitivity to light which varies in response to changes in the angle of incidence of light entering into it in such a way that, the larger the angle of incidence, the lower the sensitivity. In the photodetecting portion 40 of the previously proposed reflex colour cathode ray tube device of the beam-index type as shown in Figure 2 of the accompanying drawings, the luminescence receiving plate member 41 is shaped rectangularly in accordance with the phosphor screen 14 and the index fluorescence detector 42 is positioned at the centre of the side portion 41z of the luminescence receiving plate member 41 that extends parallel to the top end 14z of the phosphor screen 14. Accordingly, the angle of incidence of the secondary index fluorescence to the index fluorescence detector 42 varies to a considerable degree in response to the shift of a location in or on the luminescence receiving plate member 41 from which the secondary index fluorescence is emitted. The result is that the index fluorescence detector 42 has a sensitivity to the secondary index fluorescence which varies to a considerable degree in response to changes in the location on the luminescence receiving plate member 41 from which the second index fluorescence is emitted. In particular, the secondary index fluorescence emitted from the corners of the luminescence receiving plate member 41 close to the side portion 41z of the member 41 has a large angle of incidence to the index fluorescence detector 42 and, accordingly, the index fluorescence detector 42 has a low sensitivity to the secondary index fluorescence emitted from the corners of the luminescence receiving plate member 41 close to the side portion 41z. In addition, at the corners of the phosphor screen 14, the electron beam scanning the phosphor screen 14 forms a relatively large landing spot and, therefore, each of the index phosphor stripes receives the electron beam with reduced intensity. This results in the index fluorescence emitted by the index phosphor stripe disposed at the corners of the phosphor screen 14 being reduced in intensity whereby, consequently, the secondary index fluorescence emitted in the corners of the luminescence receiving plate member 41 also is reduced in intensity.

Accordingly, in the previously proposed reflex colour cathode ray tube devices of the beam-index type, the index signal obtained from the index fluorescence detector 42 varies in level to a considerable degree in response to the location on the phosphor screen 14 at which the index fluorescence is emitted by the index phosphor stripe. In particular, when the index fluorescence is emitted from a corner of the phoshor screen 14 close to the top end 14z, the level of the index signal is lowered considerably, and it is feared that, under the control of an index signal having an insufficient level, the electron beam for scanning the phosphor screen 14 may not be modulated in density appropriately and stably with the colour video signal supplied to the electron gun assembly 15 in response to the momentary scanning positions of the electron beam on the phosphor screen 14. Further, in the case of the electron beam for exciting each of the index phosphor stripes being increased in density in order to raise the intensity of the index fluorescence entering into the luminescence receiving plate member 41, a dark electron beam current in the cathode ray tube 10 is increased and, therefore, a black level of a colour image on the phosphor screen 14 rises so that the quality of the colour image deteriorates.

For the purpose of avoiding the above-mentioned problems or disadvantages that occur in the case of the previously proposed reflex colour cathode ray tube device of the beam-index type shown in Figures 1 and 2, it has been proposed, as shown in Figure 3 of the accompanying drawings, to provide a pair of index fluorescence detectors 43 and 44 at right-hand and left-hand sections of the side portion 41z of the luminescence receiving plate member 41, respectively, and to synthesise output signals obtained from both the index fluorescence detectors 43 and 44 to produce an index signal. In the reflex colour cathode ray tube device of the beam-index type provided with such index fluorescence detectors 43 and 44, secondary index fluorescence which is emitted from a location on the luminescence receiving plate member 41 corresponding to the upper left-hand corner of the phosphor screen 14 at which the index fluorescence is emitted has a reduced angle of incidence to the index fluorescence detector 43. Similarly, secondary index fluorescence which is emitted from a location on the luminencence receiving plate member 41 corresponding to the upper right-hand corner of the phosphor screen 14 at which the index fluorescence is emitted has a reduced angle of incidence to the index fluorescence detector 44, compared with the angle of incidence to the index fluorescence detector 42 of the secondary index fluorescence emitted from a location on the luminescence receiving plate member 41 corresponding to one of upper left-hand and right-hand corners of the phosphor screen 14 at which the index fluorescence is emitted in the previously proposed device shown in Figures 1 and 2. Variations in the angle of incidence of the secondary index fluorescence to each of the index fluorescence detectors 43 and 44, which are caused in response to the shift of a location in or on the luminescence receiving plate member 41 from which the secondary index fluorescence is emitted, are reduced, compared with the variations in angle of incidence to the index fluorescence detector 42 of the secondary index fluorescence in the previously proposed device shown in Figures 1 and 2. Consequently, variations in level of the index signal obtained by synthesising the detection output signals from the index fluorescence detectors 43 and 44, which are caused in response to the shift of a location on the phosphor screen 14 at which the index fluorescence is emitted, are also reduced, compared with those in the previously proposed device shown in Figures 1 and 2.

However, even though the photodetecting portion 40 is composed of the luminescence receiving plate member 41 and the index fluorescence detectors 43 and 44 are positioned in a manner as shown in Figure 3, the secondary index fluorescence emitted from the locations on the luminescence receiving plate member 41 corresponding to the upper left-hand and right-hand corners of the phosphor screen 14, at which the electron beam scanning the phosphor screen 14 forms a relatively large landing spot and therefore each of the index phosphor stripes emits the index fluorescence with reduced intensity, still does not have a sufficiently reduced angle of incidence to the index fluorescence detector 43 or 44, and the variations of the angle of incidence to the index fluorescence detector 43 or 44 of the secondary index fluorescence, which are caused in response to the shift of the location on the luminescence receiving plate member 41 from which the secondary index fluorescence is emitted, are not reduced sufficiently. Accordingly, the variations in level of the index signal obtained by synthesising the detection output signals from the index fluorescence detectors 43 and 44, which are caused in response to the shift of the location on the phosphor screen 14 at which the index fluorescence is emitted, are not reduced sufficiently, and, therefore, the problems and/or disadvantages occurring in the previously proposed device shown in Figures 1 and 2 cannot surely be eliminated.

According to a first aspect of the present invention there is provided a beam-index type colour cathode ray tube device which has a colour cathode ray tube provided with a phosphor screen formed to include a plurality of colour phosphor stripes accompanied with index phosphor on an inner surface of a screen panel portion facing a front panel portion, so that a colour image displayed on the phosphor screen can be observed through the front panel portion, and a photodetecting portion including a luminescence receiving plate member arranged to face an outer surface of the screen panel portion for receiving index fluorescence from the index phosphor to emit secondary fluorescence and a fluorescence detector for detecting the secondary fluorescence to generate an index signal, in which the index signal is obtained with a relatively high level and with reduced variations thereof in response to the index fluorescence regardless of a location on the phosphor screen of the index phosphor stripe actually emitting the index fluorescence.

According to a second aspect of the present invention there is provided a beam-index type colour cathode ray tube device which has a colour cathode ray tube provided with a phosphor screen formed to include a plurality of colour phosphor stripes accompanied with index phosphor on an inner surface of a screen panel portion facing a front panel portion, so that a colour image displayed on the phosphor screen can be observed through the front panel portion, and a photodetecting portion including a luminescence receiving plate member arranged to face an outer surface of the screen panel portion for receiving index fluorescence from the index phosphor to emit secondary fluorescence and a fluorescence detector for detecting the secondary fluorescence to generate an index signal, in which a control operation for causing an electron beam scanning the phosphor screen in the colour cathode ray tube to be modulated appropriately in density with a colour video signal in response to momentary scanning positions of the electron beam on the phosphor screen is carried out stably in dependence on the strength of the index signal.

According to a third aspect of the present invention there is provided a beam-index type colour cathode ray tube device which has a colour cathode ray tube provided with a phosphor screen formed to include a plurality of colour phosphor stripes accompanied with index phosphor on an inner surface of a screen panel portion facing a front panel portion, so that a colour image displayed on the phosphor screen can be observed through the front panel portion, and a photodetecting portion including a luminescence receiving plate member arranged to face an outer surface of the screen panel portion for receiving index fluorescence from the index phosphor to emit secondary index fluorescence, and a fluorescence detector for detecting the secondary fluorescence to generate an index signal, in which the luminescence receiving plate member is precisely supported at a proper position relative to the phosphor screen and the secondary index fluorescence emitted by the luminescence receiving plate member is detected efficiently by the fluorescence detector.

According to a fourth aspect of the present invention there is provided a beam-index type colour cathode ray tube device comprising:

a colour cathode ray tube having a front panel portion that permits coloured light to pass therethrough and a screen panel portion provided with a phosphor screen of rectangular shape that includes a plurality of colour phosphor stripes accompanied by index phosphor on an inner surface thereof facing the front panel portion;

a luminescence receiving plate member disposed to face an outer surface of the screen panel portion for receiving index fluorescence from the index phosphor and producing secondary index fluorescence in response to the index fluorescence received thereby; and

fluorescence detecting means for detecting the secondary index fluorescence produced by the luminescence receiving plate member;

where in the luminescence receiving plate member is shaped to have first and second angled side portions which are positioned to be close to respective corners of the phosphor screen each including a part of one of top and bottom ends of the screen, so as to look towards a central part of the luminescence receiving plate member; and

the fluorescence detecting means includes a first fluorescence detector attached at the first angled side portion and located in the vicinity of a position on an extension of a left-hand sideline of the phosphor screen and a second fluorescence detector attached at the second angled side portion and located in the vicinity of a position on an extension of a right-hand sideline of the phosphor screen.

In a device in accordance with the present invention, when the phosphor screen is scanned by an electron beam generated in the colour cathode ray tube, the colour phosphor stripes emit respective coloured fluorescences and the index phosphor emits index fluorescence. The index fluorescence passes through the screen panel portion to be received by the luminescence receiving plate member. The luminescence receiving plate member emits secondary index fluorescence which is of suitable wavelength for detection by the first and second fluorescence detectors in response to the index fluorescence emitted by the index phosphor and received thereby. The secondary index fluorescence emitted in or by the luminescence receiving plate member is guided through the luminescence receiving plate member to the first and second fluorescence detectors to be detected thereby, so that an index signal can be produced by synthesising output signals obtained from the first and second fluorescence detectors in response to the secondary index fluorescence detected thereby.

With the first and second fluorescence detectors attached respectively to the first and second angled or cut-out side portions of the luminescence receiving plate member so as to look towards the central part of the luminescence receiving plate member, even secondary index fluorescence emitted from locations in or on the luminescence receiving plate member corresponding to the corners of the phosphor screen at which the electron beam scanning the phosphor screen forms a relatively large landing spot, and therefore the index phosphor emits the index fluorescence with reduced intensity, has a sufficiently reduced angle of incidence to the first or second fluorescence detector, and variations of the angle of incidence to the first or second fluorescence detector of the secondary index fluorescence, which are caused in response to the shift of a location on the luminescence receiving plate member from which the secondary index fluorescence is emitted, are sufficiently reduced. Consequently, the minimum level of the index signal is sufficiently increased, and variations in level of the index signal produced by synthesising the output signals obtained from the first and second fluorescence detectors, which are caused in response to the shift of a location on the phosphor screen at which the index fluorescence is emitted, are sufficiently reduced. As a result, a control operation for causing the electron beam scanning the phosphor screen in the colour cathode ray tube to be modulated in density with a colour video signal appropriately in response to momentary scanning positions of the electron beam on the phosphor screen is carried out stably in dependence on the strength of the index signal.

Further, since the minimum level of the index signal is sufficiently increased and, therefore, the electron beam for exciting the index phosphor in the colour cathode ray tube can be decreased in density, a dark electron current in the colour cathode ray tube may be decreased to lower a black level of colour images on the phosphor screen and thereby to improve the colour purity and contrast characteristics of the colour images.

In a device embodying the present invention, taken by way of example, the fluorescence receiving plate member is supported by a holder which comprises a frame member engaging with a peripheral portion of the fluorescence receiving plate member to surround the side portions thereof, with the exception of parts to which the first and second fluorescence detectors are attached, and fixed to the outer surface of the screen panel portion of the colour cathode ray tube. The frame member is provided with a reflecting layer on at least a part of an inner surface thereof facing the side portions of the fluorescence receiving plate member.

If such a holder is used, the fluorescence receiving plate member can easily be mounted on the outer surface of the screen panel portion to be disposed precisely at a proper position relative to the phosphor screen, and the secondary fluorescence emitted by the luminescence receiving plate member is partially reflected at the side portions of the luminescence receiving plate member towards the inside of the same and guided efficiently to the first and second fluorescence detectors to be detected thereby.

The invention will now be further described, by way of illustrative and non-limiting example, with reference to the accompanying drawings, in which:

Figure 1 is a schematic plan view, partially broken away, showing a previously proposed beam-index type reflex colour cathode ray tube device;

Figure 2 is a schematic illustration showing a photodetecting portion of the beam-index type reflex colour cathode ray tube device shown in Figure 1;

Figure 3 is a schematic illustration showing a photodetecting portion applicable to the beam-index type reflex colour cathode ray tube device shown in Figure 1;

Figure 4 is a schematic plan view, partially broken away, showing a beam-index type colour cathode ray tube device embodying the present invention;

Figure 5 is a schematic side view, partly in cross-section, of the embodiment shown in Figure 4;

Figure 6 is a partial cross-sectional view of a phosphor screen employed in the embodiment shown in Figures 4 and 5;

Figure 7 is a schematic illustration showing a photodetecting portion of the embodiment shown in Figures 4 and 5;

Figure 8 is a schematic perspective view showing an example of a holder that can be used for supporting the photodetecting portion of the embodiment shown in Figures 4 and 5;

Figure 9 is a schematic cross-sectional view showing another beam-index type colour cathode ray tube device embodying the present invention;

Figure 10 is a schematic plan view, partially broken away, of the embodiment shown in Figure 9;

Figure 11 is a schematic side view, partly in cross-section, of the embodiment shown in Figure 9;

Figure 12 is a schematic cross-sectional view showing a further beam-index type colour cathode ray tube device embodying the present invention;

Figure 13 is a schematic cross-sectional view showing yet another beam-index type colour cathode ray tube device embodying the present invention; and

Figure 14 is a schematic perspective view showing a part of a holder employed for supporting a photodetecting portion of the embodiment shown in Figure 13.

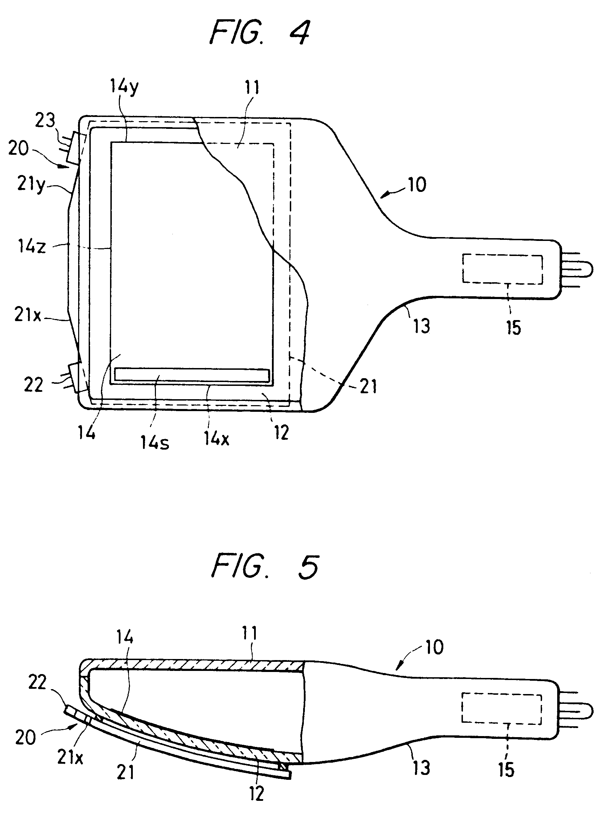

Figures 4 and 5 show an example of a beam-index type colour cathode ray tube device embodying the present invention. The device comprises a colour cathode ray tube 10 and a photodetecting portion 20 disposed at the outside of the colour cathode ray tube 10.

The colour cathode ray tube 10 has a flat glass envelope which includes a front panel portion 11, a screen panel portion 12 facing the front panel portion 11, and a neck portion 13 connected to both the portions 11 and 12. The front panel portion 11 is rectangular in shape and permits coloured light to pass therethrough. The screen panel portion 12 is also shaped rectangularly, in accordance with the front panel portion 11, is curved slightly, and permits index fluorescence, which will be described later, to pass therethrough. Further, the screen panel portion 12 is provided on its inner surface with a phosphor screen 14 that extends to be rectangular along the screen panel portion 12. The neck portion 13 contains an electron gun assembly 15 that produces an electron beam that impinges on the phosphor screen 14 from the side of the front panel portion 11 to scan the screen. Since the phosphor screen 14 is curved along the screen panel portion 12, the angle of incidence of the electron beam with the screen 14 is prevented from having large variations between different locations of the phosphor screen 14.

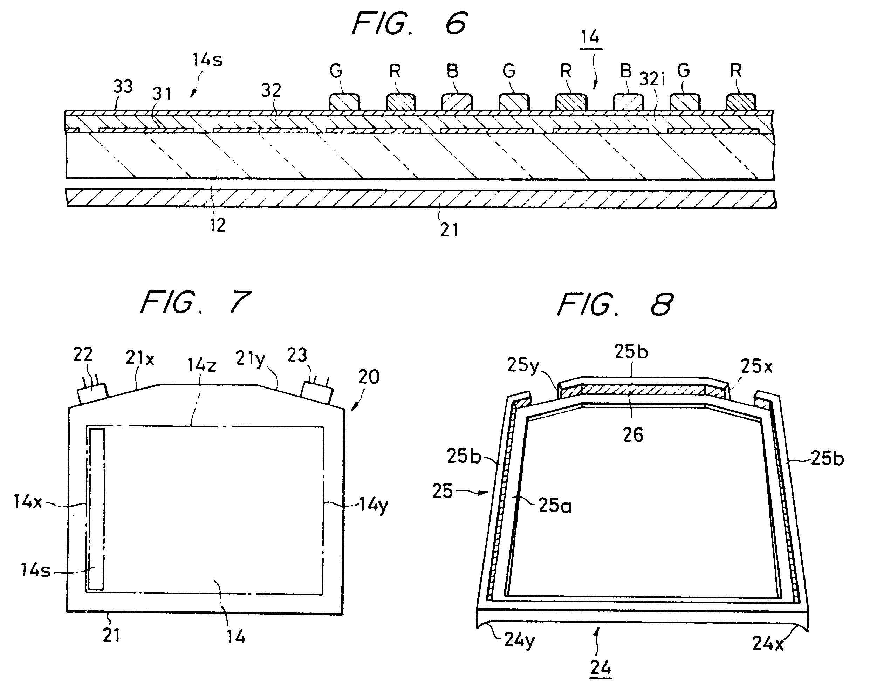

The phosphor screen 14 includes a plurality of colour phosphor stripes of three primary colours and an index phosphor. The index phosphor is not necessarily shaped into a plurality of stripes. For example, in an embodiment of the phosphor screen 14 shown in Figure 6, a plurality of light absorbing stripes 31 made of carbon, aluminium oxide or the like are secured on the inner surface of the screen panel portion 12 to extend parallel to one another at regularly spaced intervals, and an index phosphor layer 32 covers the light absorbing stripes 31 and stripe-like portions of the inner surface of the screen panel portion 12 between each adjoining pair of light absorbing stripes 31. Further, a metallic reflecting layer 33 which is formed, for example, by vacuum evaporation of aluminium, is put on the index phosphor layer 32, and a plurality of colour phosphor stripes of three primary colours, containing green phosphor stripes G, red phosphor stripes R and blue phosphor stripes B, are provided on the metallic reflecting layer 33 in a predetermined arrangement. At a partial area 14s of the phosphor screen 14 at which each horizontal beam scan starts, no colour phosphor stripe is provided on the metallic reflecting layer 33. The index phosphor layer 32 emits index fluorescence, with a peak at a range of ultraviolet rays in its spectral characteristic, in response to impingement of an electron beam thereon, and the green, red and blue phosphor stripes G, R and B produce green fluorescence, red fluorescence, and blue fluorescence, respectively, upon excitation by an electron beam.

At the outside of the screen panel portion 12, a luminescence receiving plate member 21 is disposed to face and extend along the outer surface of the screen panel portion 12. As shown in Figure 7, the luminescence receiving plate member 21 is generally rectangular in shape and has first and second cut-out, or angled, side portions 21x and 21y which are positioned to be close to two corners of the phosphor screen 14, each including a part of a top end 14z of the screen, so as to look towards a central part of the luminescence receiving plate member 21. A first index fluorescence detector 22 containing a photosensitive device such as a photodiode is attached to the first cut-out side portion 21x of the luminescence receiving plate member 21 so as to be located in the vicinity of a position on an extension of a left-hand sideline 14x of the phosphor screen 14, and a second index fluorescence detector 23 also containing a photosensitive device such as a photodiode is attached to the second cut-out side portion 21y of the luminescence receiving plate member 21 so as to be located in the vicinity of a position on an extension of a right-hand sideline 14y of the phosphor screen 14.

The luminescence receiving plate member 21 may be formed, for example, of plastics material, such as acrylic resins, in which are dispersed specific phosphors which are excited by the index fluorescence emitted from the index phosphor layer 32 and emit secondary index fluorescence in a wavelength range different from that of the index fluorescence and suitable for detection by the photosensitive devices contained in the first and second index fluorescence detectors 22 and 23. The luminescence receiving plate member 21 receives the index fluorescence emitted from the index phosphor layer 32 through the screen panel portion 12 and produces the secondary index fluorescence in response to the index fluorescence received thereby.

The first and second index fluorescence detectors 22 and 23 are operative to detect the secondary index fluorescence emitted in or by the luminescence receiving plate member 21 and to generate first and second output signals, respectively, in response to the secondary index fluorescence that they receive. An index signal is produced by synthesising the first and second output signals from the first and second index fluorescence detectors 22 and 23.

One surface opposite to a surface facing the screen panel portion 12, and side portions of the luminescence receiving plate member 21, may be covered by a thin metallic reflecting layer formed, for example, by means of vacuum evaporation of aluminium, with the exception of a part of the first angled or cut-out side portion 21x to which the first index fluorescence detector 22 is attached and a part of the second angled or cut-out portion 21y to which the second index fluorescence detector 23 is attached. The luminescence receiving plate member 21 may be stuck to the outer surface of the screen panel portion 12 with adhesive tape or the like at its output peripheral portion, and the first and second index fluorescence detectors 22 and 23 may be attached to the first and second cut-out side portions 21x and 21y, respectively, of the luminescence receiving plate member 21 with transparent adhesive agent.

In the embodiment of the present invention described above, when the phosphor screen 14 is scanned by the electron beam generated by the electron gun assembly 15 in the colour cathode ray tube 10, the index phosphor layer 32 is excited by the electron beam which impinges on the index phosphor layer 32 through the metallic reflecting layer 33 and emits the index fluorescence. The index fluorescence emitted by portions of the index phosphor layer 32 provided on the light absorbing stripes 31 is intercepted by the light absorbing stripes 31, and the index fluorescence emitted by other portions 32i of the index phosphor layer 32, located on the inner surface of the screen panel position 12 between adjoining light absorbing stripes 31, enters into the luminescence receiving plate member 21 through the screen panel portion 12. The luminescence receiving plate member 21 produces the secondary index fluorescence at a location thereon where the index fluorescence from the portions 32i of the index phosphor layer 32 enters thereinto. The secondary index fluorescence is detected by the first and second index fluorescence detectors 22 and 23, and the index signal is produced by synthesising the first and second output signals from the first and second index fluorescence detectors 22 and 23.

The index signal thus obtained is used for causing the electron beam generated by the electron gun assembly 15 for scanning the phosphor screen 14 to be modulated in density with a colour video signal including green, red and blue video signals supplied to the electron gun assembly 15 appropriately in response to momentary scanning positions of the electron beam on the phosphor screen 14. With such an electron beam which is modulated in density in response to the index signal, the green, red and blue phosphor stripes G, R and B on the phosphor screen 14 emit green, red and blue fluorescences each having an intensity determined in accordance with the density of the electron beams, respectively, and a colour image is displayed by these green, red and blue fluorescences on the phosphor screen 14, which image can be observed through the front panel portion 11 from outside of the front panel portion 11.

In this case, the secondary index fluorescence which is emitted from a location on the luminescence receiving plate member 21 corresponding to the upper left-hand corner of the phosphor screen 14 at which the index fluorescence is emitted has a sufficiently reduced angle of incidence to the first index fluorescence detector 22, and the secondary index fluorescence which is emitted from a location on the luminescence receiving plate member 21 corresponding to the upper right-hand corner of the phosphor screen 14 at which the index fluorescence is emitted also has a sufficiently reduced angle of incidence to the second index fluorescence detector 23, as compared with the angle of incidence to the index fluorescence detector 42 of the secondary index fluorescence emitted from a location in the luminescence receiving plate member 41 corresponding to one of the upper left-hand and right-hand corners of the phosphor screen 14 at which the index fluorescence is emitted in the previously proposed device shown in Figures 1 and 2. Therefore, variations in the angle of incidence to each of the first and second index fluorescence detectors 22 and 23 of the secondary index fluorescence, which are caused in response to a shift of the location on the luminescence receiving plate member 21 from which the secondary index fluorescence is emitted, are sufficiently reduced, compared with the previously proposed device shown in Figures 1 and 2. Consequently, variations in level of the index signal obtained by synthesising the output signals obtained from the first and second index fluorescence detectors 22 and 23, which are caused in response to the shift of the location on the phosphor screen 14 at which the index fluorescence is emitted, are also sufficiently reduced, compared with those in the previously proposed device shown in Figures 1 and 2.

In this connection, a measurement of the level of the index signal was conducted in an experiment in which a colour cathode ray tube having a screen size of 101.6 mm (4 inches) was adopted as a sample tube corresponding to the colour cathode ray tube 10 and photodetecting portions corresponding to the photodetecting portions 40 shown in Figures 2 and 3 and the photodetecting portion 20 shown in Figure 7, respectively, were attached selectively to the sample tube. The following results were obtained.

In the case in which a photodetecting portion corresponding to the photodetecting portion 40 shown in Figure 2 was attached to the sample tube, an index signal having a ratio of maximum level to minimum level of 100/7 was obtained. In the case in which a photodetecting portion corresponding to the photodetecting portion 40 shown in Figure 3 was attached to the sample tube, an index signal having a ratio of maximum level to minimum level of 92/40 was obtained. In the case in which a photodetecting portion corresponding to the photodetecting portion 20 shown in Figure 7 was attached to the sample tube, an index signal having a ratio of maximum level to minimum level of 86/78 was obtained.

As can be understood from the foregoing results, in the beam-index type colour cathode ray tube device of Figures 4 and 5, the index signal obtained has a relatively high level and reduced variation in response to the index fluorescence emitted from various locations over the phosphor scren 14. Therefore, the control operation for causing the electron beam scanning the phosphor screen 14 in the colour cathode ray tube to be modulated in density with the colour video signal appropriately in response to the momentary scanning positions of the electron beam on the phosphor screen 14 is carried out stably in dependence on the strength of the index signal. Further, since the minimum level of the index signal is sufficiently increased and accordingly, the electron beam for exciting the index phosphor layer 32 in the colour cathode ray tube 10 can be decreased in density, a dark electron current in the colour cathode ray tube 10 may be decreased to lower a black level of the colour image on the phosphor screen 14, thereby to improve the colour purity and contrast characteristics of the colour image.

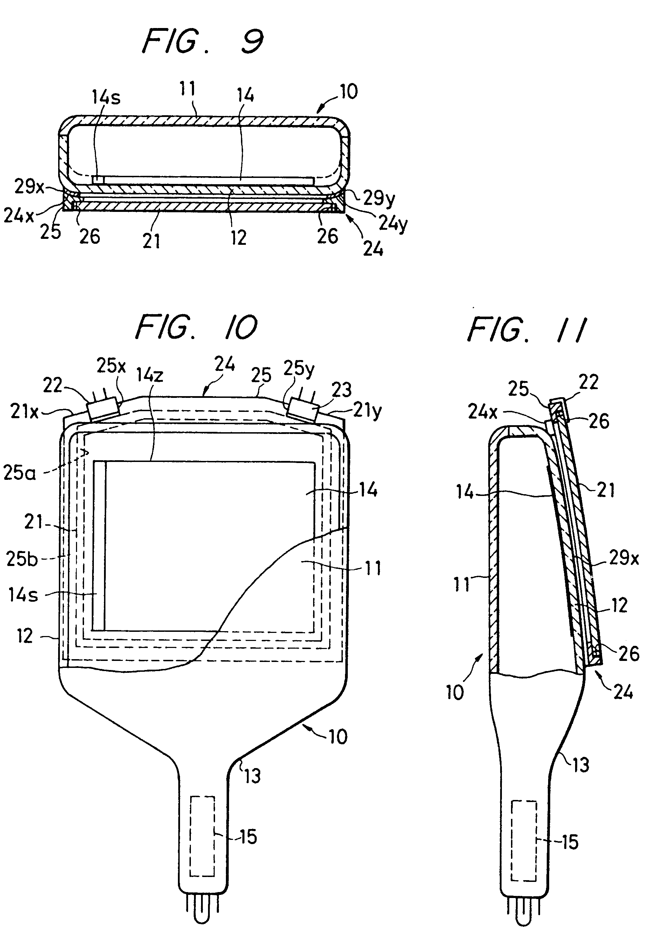

In a modification of the above-described embodiment, the photodetecting portion 20 including the luminescence receiving plate member 21, which is not provided with a metallic layer on its side portions, may be supported by a holder 24 as shown in Figure 8 to cause the luminescence receiving plate member 21 to face the outer surface of the screen panel portion 12 of the colour cathode ray tube 10. The holder 24 of Figure 8 comprises a frame member 25 formed, for example, of a plastics material such as an acrylonitrile-butadien-styrene copolymer to have a base portion 25a for coming into contact with the outer peripheral portion of the luminescence receiving plate member 21 and a side wall portion 25b for surrounding the side portions of the luminescence receiving plate member 21, and a metallic reflecting layer 26 provided on the inner surface of the side wall portion 25b which faces the side portions of the luminescence receiving plate member 21. The side wall portion 25b of the frame member 25 is provided with openings 25x and 25y in which the first and second index fluorescence detectors 22 and 23 are inserted. Further, at opposite ends of the base portion 25a which extend along the left-hand and right-hand sidelines 14x and 14y of the phosphor screen 14, respectively, and face the outer surface of the screen panel portion 12, curved projections 24x and 24y are provided to fit to respective curved edges of the screen panel portion 12. The metallic layer 26 is formed, for example, by means of vacuum evaporation of aluminium or plating of chromium.

Figures 9, 10 and 11 show another beam-index colour cathode tube device embodying the present invention, in which the holder 24 is employed for supporting the photodetecting portion 20. In this embodiment, the holder 24 is attached to the screen panel portion 12 of the colour cathode ray tube 10 by adhesive tape 29x put between the curved projection 24x and the outer surface of the screen panel portion 12 and adhesive tape 29y put between the curved projection 24y and the outer surface of the screen panel portion 12. The luminescence receiving plate member 21 (without a metallic layer on its side portions), together with the first and second index fluorescence detectors 22 and 23 attached to the first and second cut-out side portions 21x and 21y, respectively, of the luminescence receiving plate member 21, are mounted to the holder 24 in such a manner that the outer peripheral portion of the luminescence receiving plate member 21 is engaged with the base portion 25a to be adhered thereto, the side portions of the luminescence receiving plate member 21 are surrounded by the metallic reflecting layer 26 provided on the inner surface of the side wall portion 25b, and the first and second fluorescence detectors 22 and 23 are placed in the openings 25x and 25y.

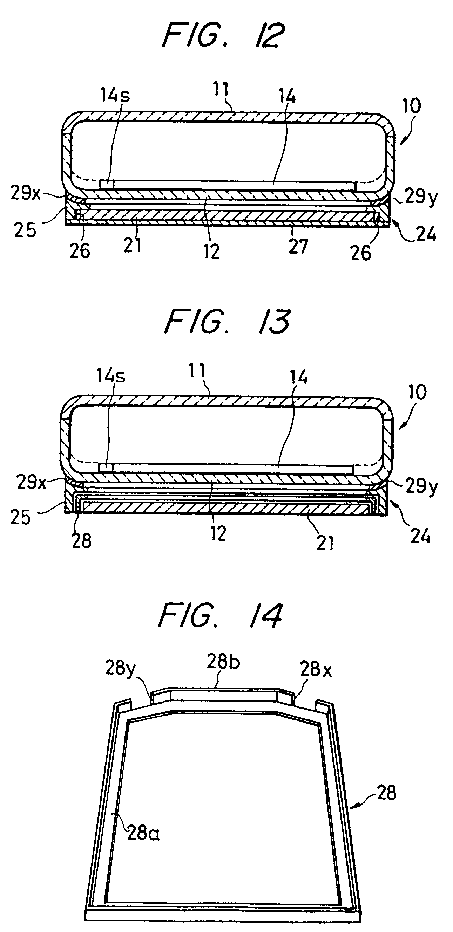

Figure 12 shows a further beam-index colour cathode ray tube device embodying the present invention which also employs the holder 24 for supporting the photodetecting portion 20. In the embodiment of Figure 12, the holder 24 includes a back board member 27 in addition to the frame member 25 and the metallic reflecting layer 26. The back board member 27 is stuck with adhesive agent to the frame member 25, with which the luminescence receiving plate member 21 is engaged, so as to support one of the surfaces of the luminescence receiving plate member 21 which is opposite to the other of the surfaces that faces the screen panel portion 12.

Figure 13 shows a still further beam-index colour cathode ray tube device embodying the present invention which again employs the holder 24 for supporting the photodetecting portion 20. In the embodiment shown in Figure 13, the holder 24 comprises the frame member 25 (which is not provided with a metallic reflecting layer on the inner surface of the wall portion thereof) and a metallic reflecting plate member 28 disposed inside of the frame member 25 to be adhered to the same. As shown in Figure 14, the metallic reflecting plate member 28 is made, for example, of aluminium foil or the like to have a base portion 28a formed in the shape of a frame for coming into contact with the outer peripheral portion of the luminescence receiving plate member 21 and a side wall portion 28b for surrounding the side portions of the luminescence receiving plate member 21. The side wall portion 28b of the metallic reflecting plate member 28 is provided with a pair of openings 28x and 28y at locations corresponding to the openings 25x and 25y of the frame member 25, respectively, so that the first and second index fluorescence detectors 22 and 23 are placed in the openings 28x and 28y, respectively.

The luminescence receiving plate member 21 (without a metallic layer on its side portions) is mounted to the metallic reflecting plate member 28 placed at the inside of the frame member 25 in such a manner that the outer peripheral portion of the luminescence receiving plate member 21 is engaged with the base portion 28a to be adhered thereto, and the side potions of the luminescence receiving plate member 21 are surrounded by the side wall portion 28b. The first and second index fluorescence detectors 22 and 23, both attached to the luminescence receiving plate member 21, are placed in the openings 28x and 28y of the metallic reflecting plate member 28 and in the openings 25x and 25y of the frame member 25.

A back board member such as that shown at 27 in Figure 12 can be applied also to the holder 24 employed in the embodiment of Figure 13.

In the embodiments employing the holder 24 for supporting the photodetecting portion 20, which includes the luminescence receiving plate member 21 and the first and second index fluorescence detectors 22 and 23, as described above, since the luminescence receiving plate member 21 is held so as to cause its side portions to face the metallic reflecting layer 26 or the metallic reflecting plate member 28, the secondary index fluorescence emitted by the luminescence receiving plate member 21 and directed to parts of the side portions of the luminescence receiving plate member 21 other than the parts in the first and second cut-out side portions 21x and 21y to which the first and second index fluorescence detectors 22 and 23, respectively, are attached, is surely reflected at the side portions of the luminescence receiving plate member 21 towards the inside of the plate member, and then guided efficiently to the first and second index fluorescence detectors 22 and 23 to be detected thereby.

Further, the luminescence receiving plate member 21 is easily mounted to the screen panel portion 12 of the colour cathode ray tube 10 so as to be disposed precisely at a proper position relative to the phosphor screen 14, and the surface of the luminescence receiving plate member 21 facing the outer surface of the screen panel portion 12 is sealed and prevented from being smeared with dust or dirt, so that the index fluorescence from the phosphor screen 14 is efficiently received by the luminescence receiving plate member 21.

## Claims

1. A beam-index type colour cathode ray tube device comprising:

   a colour cathode ray tube (10) having a front panel portion (11) that permits coloured light to pass therethrough and a screen panel portion (12) provided with a phosphor screen (14) of rectangular shape that includes a plurality of colour phosphor stripes (G,R,B) accompanied by index phosphor (32) on an inner surface thereof facing the front panel portion (11);

   a luminescence receiving plate member (21) disposed to face an outer surface of the screen panel portion (12) for receiving index fluorescence from the index phosphor (32) and producing secondary index fluorescence in response to the index fluorescence received thereby; and

   fluorescence detecting means (22,23) for detecting the secondary index fluorescence produced by the luminescence receiving plate member (21);

   characterised in that the luminescence receiving plate member (21) is shaped to have first and second angled side portions (21x,21y) which are positioned to be close to respective corners of the phosphor screen (14) each including a part of one of top and bottom ends of the screen, so as to look towards a central part of the luminescence receiving plate member (21); and

   the fluorescence detecting means (22,23) includes a first fluorescence detector (22) attached at the first angled side portion (21x) and located in the vicinity of a position on an extension of a left-hand sideline (14x) of the phosphor screen (14) and a second fluorescence detector (23) attached at the second angled side portion (21y) and located in the vicinity of a position on an extension of a right-hand sideline (14y) of the phosphor screen (14).

2. A device according to claim 1, wherein the luminescence receiving plate member (21) is generally rectangular in shape and extends to cover the phosphor screen (14) with the screen panel portion (12) between the plate member (21) and the screen (14).

3. A device according to claim 1 or claim 2, wherein the luminescence receiving plate member (21) is formed of plastics material having phosphors dispersed therein, the phosphors being such as to be excited by the index fluorescence from the index phosphor (32) of the phosphor screen (14) to emit the secondary index fluorescence.

4. A device according to claim 1, claim 2 or claim 3, wherein the first and second fluorescence detectors (22,23) are attached to the first and second angled side portions (21x,21y), respectively, by transparent adhesive agent.

5. A device according to claim 4, wherein the luminescence receiving plate member (21) is provided with a metallic reflecting layer covering side portions thereof with the exception of parts of the first and second angled side portions (21x,21y) to which the first and second fluorescence detectors (22,23), respectively, are attached.

6. A device according to any one of claims 1 to 4, comprising a holder (24) stuck to the screen panel portion (12) of the colour cathode ray tube (10) for supporting the luminescence receiving plate member (21).

7. A device according to claim 6, wherein the holder (24) comprises a frame member (25) formed to have a base portion (25a) for contacting an outer peripheral portion of the luminescence receiving plate member (21) and a side wall portion (25b) for surrounding side portions of the luminescence receiving plate member (21) and contacting the base portion (25a) at its outer peripheral portion, and a metallic reflecting layer (26) provided on an inner surface of the side wall portion (25b) of the frame member (25).

8. A device according to claim 7, wherein the side wall portion (25b) of the frame member

(25) is provided with a pair of openings (25x,25y) in which the first and second fluorescence detectors (22,23) attached to the first and second angled side portions (21x,21y), respectively, are placed.

9. A device according to claim 7, wherein the holder (24) comprises a back board member (27) stuck to the frame member (25) with which the luminescence receiving plate member (21) is engaged, so as to support a surface of the luminescence receiving plate member (21) opposite to a surface of the luminescence receiving plate member (21) facing the screen panel portion (12).

10. A device according to claim 6, wherein the holder (24) comprises a frame member (25) and a metallic reflecting plate member (28) disposed inside of the frame member (25) for engaging the luminescence receiving plate member (21).

11. A device according to claim 10, wherein the metallic reflecting plate member (28) has a base portion (28a) formed in the shape of a frame for contacting an outer peripheral portion of the luminescence receiving plate member (21) and a side wall portion (28b) for surrounding side portions of the luminescence receiving plate member (21) and contacting the base portion (28a) at its outer peripheral portion.

12. A device according to claim 11, wherein the side wall portion (28b) of the metallic reflecting plate member (28) is provided with openings (28x,28y) in which the first and second fluorescnece detectors (22,23) attached to the first and second angled side portions (21x,21y), respectively, are placed.

13. A device according to claim 12, wherein the holder (25) comprises a back board member (27) stuck to the frame member (25), the metallic reflecting plate member (28) being positioned together with the luminescence receiving plate member (21) so as to support a surface of the luminescence receiving plate member (21) opposite to a surface of the luminescence receiving plate member (21) facing the screen panel portion (12).

**Revendications**

1. Dispositif à tube à rayons cathodiques couleur du type à indexage par faisceau, comportant:
   un tube (10) à rayons cathodiques couleur comprenant une portion (11) constituant le panneau avant qui permet le passage, à travers elle, de la lumière colorée, et une portion (12), constituant le panneau d'écran, munie d'un écran luminescent (14) de forme rectangulaire qui inclut une pluralité de bandes luminescentes couleur (G,R,B) accompagnées d'un matériau luminescent d'indexage (32) sur sa surface intérieure qui fait face à la portion (11) constituant le panneau avant;
   un élément (21) constituant une plaque réceptrice de la luminescence, disposé pour faire face à une surface extérieure de la portion (12) constituant le panneau d'écran, pour recevoir la fluorescence d'indexage en provenance du matériau luminescent d'indexage (32) et pour produire une fluorescence d'indexage secondaire en réponse à la fluorescence d'indexage ainsi reçue; et
   des moyens (22,23) de détection de la fluorescence pour détecter la fluorescence d'indexage secondaire produite par l'élément (21) constituant plaque réceptrice de luminescence;
   dispositif caractérisé par le fait que l'élément (21) constituant plaque réceptrice de la luminescence a une forme telle qu'il présente une première et une seconde portions latérales chanfreinées (21x,21y) qui sont positionnées pour être près des coins respectifs de l'écran luminescent (14), chacune incluant une partie de l'une des deux, de l'extrémité supérieure et de l'extrémité inférieure de l'écran, regardant en direction d'une partie centrale de l'élément (21) constituant plaque réceptrice de la luminescence; et
   les moyens (22,23) de détection de la fluorescence incluent un premier détecteur de fluorescence (22) fixé à la première portion latérale chanfreinée (21x) et placé au voisinage d'une position située sur le prolongement d'un bord gauche (14x) de l'écran luminescent (14) et un second détecteur de fluorescence (23) fixé à la seconde portion latérale chanfreinée (21y) et placé au voisinage d'une position située sur le prolongement d'un bord droit (14y) de l'écran luminescent (14).

2. Dispositif selon la revendication 1 dans lequel l'élément (21) constituant plaque réceptrice de la luminescence est de forme générale rectangulaire et s'étend de façon à couvrir l'écran luminescent (14), la portion (12) constituant le panneau d'écran étant entre l'élément (21) constituant la plaque et l'écran (14).

3. Dispositif selon la revendication 1 ou la revendication 2, dans lequel l'élément (21) constituant la plaque réceptrice de la luminescence est formé d'un matériau plastique dans lequel sont dispersés des matériaux luminescents, les matériaux luminescents étant prévus pour être excités par la fluorescence d'indexage provenant du matériau luminescent d'indexage (32) de l'écran luminescent (14) pour émettre la fluorescence d'indexage secondaire.

4.  Dispositif selon la revendication 1, la revendication 2 ou la revendication 3, dans lequel le premier et le second détecteurs de fluorescence (22,23) sont fixés à la première et à la seconde portions latérales chanfreinées (21x,21y), respectivement, au moyen d'un agent adhésif transparent.

5.  Dispositif selon la revendication 4, dans lequel l'élément (21) constituant la plaque réceptrice de la luminescence comporte une couche métallique réfléchissante couvrant ses portions latérales, à l'exception des parties de la première et de la seconde portions latérales chanfreinées (21x,21y) auxquelles sont respectivement attachés le premier et le second détecteurs de fluorescence (22,23).

6.  Dispositif selon l'une quelconque des revendications 1 à 4, comportant un support (24) collé à la portion (12), constituant le panneau d'écran, du tube à rayons cathodiques couleur (10) pour supporter l'élément (21) constituant la plaque réceptrice de la luminescence.

7.  Dispositif selon la revendication 6, dans lequel le support (24) comporte un élément (25), constituant le cadre, formé de façon à avoir une portion de base (25a) pour venir en contact avec une portion périphérique extérieure de l'élément (21) constituant la plaque réceptrice de la luminescence, ainsi qu'une portion (25b), constituant paroi latérale, pour entourer les portions latérales de l'élément (21) constituant la plaque réceptrice de la luminescence et pour venir en contact avec la portion de base (25a) à sa portion périphérique extérieure, ainsi qu'une couche métallique réfléchissante (26) prévue sur la surface intérieure de la portion (25b) constituant la paroi latérale de l'élément (25) constituant le cadre.

8.  Dispositif selon la revendication 7, dans lequel la portion (25b), constituant la paroi latérale, de l'élément (25b) constituant le cadre présente une paire d'ouvertures (25x,25y) dans lesquels sont respectivement placés le premier et le second détecteurs de fluorescence (22,23) fixés à la première et à la seconde portions latérales chanfreinées (21x,21y).

9.  Dispositif selon la revendication 7, dans lequel le support (24) comporte un élément (27), constituant panneau arrière, qui est collé à l'élément (25) constituant le cadre et avec lequel vient en prise l'élément (21) constituant la plaque réceptrice de la luminescence, de façon à supporter une surface de l'élément (21), constituant la plaque réceptrice de la luminescence, opposée à la surface de l'élément (21), constituant la plaque réceptrice de la luminescence, qui fait face à la portion (12) constituant le panneau d'écran.

10. Dispositif selon la revendication 6, dans lequel le support (24) comporte un élément (25) constituant le cadre et un élément (28) constituant plaque métallique réfléchissante disposée à l'intérieur de l'élément (25) constituant le cadre pour venir en prise avec l'élément (21) constituant la plaque réceptrice de la luminescence.

11. Dispositif selon la revendication 10, dans lequel l'élément (28) constituant la plaque métallique réfléchissante comporte une portion de base (28a) qui présente la forme d'un cadre pour venir en contact avec une portion périphérique extérieure de l'élément (21) constituant la plaque réceptrice de la luminescence, ainsi qu'une portion (28b), constituant paroi latérale, pour entourer les portions latérales de l'élément (21) constituant la plaque réceptrice de la luminescence et venir en contact avec la portion de base (28) à sa portion périphérique extérieure.

12. Dispositif selon la revendication 11, dans lequel la portion (28b), constituant la paroi latérale, de l'élément (28) constituant la plaque métallique réfléchissante présente des ouvertures (28x,28y) dans lesquelles sont respectivement placés le premier et le second détecteurs de la fluorescence (22,23) fixés à la première et la seconde portions latérales chanfreinées (21x,21y).

13. Dispositif selon la revendication 12, dans lequel le support (25) comporte un élément (27), constituant panneau arrière, collé à l'élément (25) constituant le cadre, l'élément (28), constituant plaque métallique réfléchissante, étant placé, avec l'élément (21) constituant la plaque réceptrice de la luminescence, de façon à supporter la surface de l'élément (21), constituant la plaque réceptrice de la luminescence, opposée à la surface de l'élément (21), constituant la plaque réceptrice de la luminescence, qui fait face à la portion (12) constituant le

panneau d'écran.

**Patentansprüche**

1. Farbkathodenstrahlröhrenanordnung vom Strahlindextyp, bestehend aus:

einer Farbkathodenstrahlröhre (10) alt einem für farbiges Licht durchlässigen Frontscheibenteil (11) und einem Bildschirmscheibenteil (12), mit einem rechteckigen Leuchtstoffbildschirm (14), der eine Vielzahl von Leuchtstoffstreifen (G, R, B) aufweist, die von einen Indexleuchtstoff (32) begleitet werden, der auf einer dem Frontscheibenteil (11) zugewandten Innenfläche des Bildschirmscheibenteils (12) angeordnet ist,

einer der Außenfläche des Bildschirmscheibenteils (12) gegenüberliegenden Luminiszenz-Auffangplatte (21) zum Auffangen von von dem Indexleuchtstoff (32) kommender Indexfluoreszenz und zur Erzeugung von sekundärer Indexfluoreszenz in Abhängigkeit von der von ihr aufgefangenen Indexfluoreszenz und

einer Fluoreszenzdetektoreinrichtung (22, 23) zur Detektierung der von der Luminiszenz-Auffangplatte (21) erzeugten sekundären Indexfluoreszenz,

dadurch **gekennzeichnet,**

daß die Luminiszenz-Auffangplatte (21) so geformt ist, daß sie einen ersten und einen zweiten abgeschrägten Seitenabschnitt (21x, 21y) aufweist, die sich jeweils in der Nähe einer Ecke des Leuchtstoffbildschirms befinden und jeweils einen Teil entweder des oberen oder des unteren Endes des Bildschirms einschließen, so daß sie zu dem zentralen Teil der Luminiszenz-Auffangplatte (21) weisen,

und daß die Fluoreszenzdetektoreinrichtung (22, 23) einen ersten Fluoreszenzdetektor (22) aufweist, der an des ersten abgeschrägten Seitenabschnitt (21x) befestigt ist und in der Nachbarschaft einer Position auf einer Verlängerung der linken Seitenlinie (14x) des Leuchtstoffbildschirms (14) liegt, sowie einen zweiten Fluoreszenzdetektor (23), der an dem zweiten abgeschrägten Seitenabschnitt (21y) befestigt ist und in der Nachbarschaft einer Position auf einer Verlängerung der rechten Seitenlinie (14y) des Leuchtstoffbildschirms (14) liegt.

2. Anordnung nach Anspruch 1, bei der die Luminiszenz-Auffangplatte (21) im wesentlichen rechteckig ist und sich so ausdehnt, daß sie den Leuchtstoffbildschirm (14) mit dem Bildschirmscheibenteil (12) zwischen der Luminiszenz-Auffangplatte (21) und dem Leuchtstoffbildschirm (14) abdeckt.

3. Anordnung nach Anspruch 1 oder 2, bei der die Luminiszenz-Auffangplatte (21) aus Kunststoff mit darin verteilten Leuchtstoffen besteht, wobei die Leuchtstoffe durch die von dem Indexleuchtstoff (32) des Leuchtstoffbildschirms (14) kommende Indexfluoreszenz zur Emission der sekundären Indexfluoreszenz anregbar sind.

4. Anordnung nach Anspruch 1, 2 oder 3, bei der der erste und der zweite Fluoreszenzdetektor (22, 23) mit Hilfe eines transparenten Klebstoffs an dem ersten bzw. dem zweiten abgeschrägten Seitenabschnitt (21x, 21y) befestigt sind.

5. Anordnung nach Anspruch 4, bei der die Luminiszenz-Auffangplatte (21) mit einer reflektierenden Metallschicht versehen ist, die die Seitenabschnitte der Luminiszenz-Auffangplatte abdeckt mit Ausnahme von Teilen des ersten und des zweiten abgeschrägten Seitenabschnitts (21x, 21y), an denen der erste bzw. der zweite Fluoreszenzdetektor (22, 23) befestigt sind.

6. Anordnung nach einem der Ansprüche 1 bis 4, bei der ein an dem Bildschirmscheibenteil (12) der Farbkathodenstrahlröhre (10) angebrachter Halter (24) zur Halterung der Luminiszenz-Auffangplatte (21) vorgesehen ist.

7. Anordnung nach Anspruch 6, bei der der Halter (24) ein Rahmenteil (25) umfaßt mit einem Basisabschnitt (25a), der einen äußeren peripheren Abschnitt der Luminiszenz-Auffangplatte (21) berührt, sowie mit einem Seitenwandabschnitt (25b), der die Seitenabschnitte der Luminiszenz-Auffangplatte (21) umfaßt und den Basisabschnitt (25a) in seinem äußeren peripheren Bereich berührt, wobei an einer Innenfläche des Seitenwandabschnitts (25b) des Rahmenteils (25) eine reflektierende Metallschicht (26) vorgesehen ist.

8. Anordnung nach Anspruch 7, bei der der Seitenabschnitt (25b) des Rahmenteils (25) ein Paar von Öffnungen (25x, 25y) aufweist, in denen der erste bzw. der zweite Fluoreszenzdetektor (22, 23) angeordnet sind, die an dem ersten bzw. dem zweiten abgeschrägten Seitenabschnitt (21x, 21y) befestigt sind.

9. Anordnung nach Anspruch 7, bei der der Halter (24) ein Rückwandteil (27) besitzt, das an dem mit der Luminiszenz-Auffangplatte (21) verbundenen Rahmenteil (25) so befestigt ist, daß es (27) diejenige Fläche der Luminiszenz-Auffangplatte (21) unterstützt, die der dem Bildschirmscheibenteil (12) zugewandten Fläche der Luminiszenz-Auffangplatte (21) entgegengesetzt ist.

10. Anordnung nach Anspruch 6, bei der der Halter (24) ein Rahmenteil (25) umfaßt sowie innerhalb des Rahmenteils (25) angeordnet eine reflektierende Metallplatte (28) zur Verbindung mit der Luminiszenz-Auffangplatte (21).

11. Anordnung nach Anspruch 10, bei der die reflektierende Metallplatte (28) einen Basisabschnitt (18a) aufweist, der einen äußeren peripheren Abschnitt der Luminiszenz-Auffangplatte (21) berührt, sowie einen Seitenwandabschnitt (28b), der Seitenabschnitte der Luminiszenz-Auffangplatte (21) umgreift und den Basisabschnitt (28a) in seinem äußeren peripheren Bereich berührt.

12. Anordnung nach Anspruch 11, bei der der Seitenwandabschnitt (28b) der reflektierenden Metallplatte (28) mit Öffnungen (28x, 28y) versehen ist, in denen der erste und der zweite Fluoreszenzdetektor (22, 23) angeordnet sind, die an dem ersten bzw. dem zweiten abgeschrägten Seitenabschnitt (21x, 21y) befestigt sind.

13. Anordnung nach Anspruch 12, bei der der Halter (25) ein Rückwandteil (27) besitzt, das an dem Rahmenteil (25) befestigt ist, wobei die reflektierende Metallplatte (28) zusammen mit der Luminiszenz-Auffangplatte (21) so positioniert ist, daß diejenige Fläche der Luminiszenz-Auffangplatte (21) unterstützt wird, die der dem Bildschirmscheibenteil (12) zugewandten Fläche der Luminiszenz-Auffangplatte (21) gegenüber liegt.

## FIG. 1

## FIG. 2

## FIG. 3

## FIG. 4

## FIG. 5

FIG. 6

FIG. 7

FIG. 8

# FIG. 9

# FIG. 10

# FIG. 11

FIG. 12

FIG. 13

FIG. 14